# EUROPEAN PATENT APPLICATION

(11) **EP 3 917 179 A1**
(43) Date of publication of application: **01.12.2021**
(21) Application number: 20744581.8
(22) Date of filing: 21.01.2020
(51) Int. Cl.: H04W 4/44

(54) **RESOURCE POOL SWITCHING METHOD AND APPARATUS, AND MOBILE TERMINAL, NETWORK SIDE DEVICE AND MEDIUM**

(30) Priority: 25.01.2019 CN 201910075020
(71) Applicant: VIVO MOBILE COMMUNICATION CO., LTD., Dongguan, Guangdong 523860 (CN)
(72) Inventor: YANG, Xiaodong, Dongguan, Guangdong 523860 (CN)
(74) Representative: Chimini, Francesco
(86) International application number: PCT/CN2020/073491
(87) International publication number: WO 2020/151701

(57) **Abstract**

Disclosed are a resource pool switching method and apparatus, and a mobile terminal, a network side device, and a medium. The resource pool switching method applied to a mobile terminal comprises: if resource pool switching is triggered, switching a currently used resource pool to an exceptional pool.

## Description

### CROSS-REFERENCE TO RELATED APPLICATION

This application claims priority to Chinese Patent Application No. 201910075020.8, filed on January 25, 2019 in China, which is incorporated herein by reference in its entirety.

### TECHNICAL FIELD

The present disclosure relates to the field of communications technologies, and in particular, to a resource pool switching method and apparatus, a mobile terminal, a network side device, and a medium.

### BACKGROUND

Internet of Vehicles (vehicle to everything, V2X) communication includes various services, for example, basic security communication, advanced (automatic) driving, platooning, and sensor extension. The V2X study of the 5th generation (5th generation, 5G) system has just begun, and companies tend to support a plurality of transmission modes in the 5G system, including unicast, multicast, and broadcast. Unicast is one-to-one transmission, broadcast is one-to-multiple transmission, and multicast is one-to-multiple transmission in group communication.

In some cases (for example, a radio link fails, a decision timer expires, a mobile terminal is rebuilding, and a mobile terminal receives a switching instruction but does not complete switching), a V2X mobile terminal switches to an abnormal/exceptional resource pool (Exceptional pool), to ensure service continuity. The abnormal/exceptional resource pool is a resource pool specified by a communications protocol to ensure service continuity.

Resource pool switching in the foregoing cases cannot ensure service performance in another case (for example, a mobile terminal in group communication is located in a plurality of cells), and consequently service performance is low.

### SUMMARY

Embodiments of the present disclosure provide a resource pool switching method and apparatus, a mobile terminal, a network side device, and a medium, to resolve a problem of low service performance.

According to a first aspect, an embodiment of the present disclosure provides a resource pool switching method applied to a mobile terminal, and the method includes:
if resource pool switching is triggered, switching a currently used resource pool to an abnormal resource pool.

According to a second aspect, an embodiment of the present disclosure provides a resource pool switching method applied to a network side device, and the method includes:
configuring a resource pool switching condition, and sending the resource pool switching condition to a mobile terminal in group communication.

According to a third aspect, an embodiment of the present disclosure provides a resource pool switching apparatus applied to a mobile terminal, and the apparatus includes:
a switching module, configured to: if resource pool switching is triggered, switch a currently used resource pool to an abnormal resource pool.

According to a fourth aspect, an embodiment of the present disclosure provides a resource pool switching apparatus applied to a network side device, and the apparatus includes:
a configuration module, configured to: configure a resource pool switching condition, and send the resource pool switching condition to a mobile terminal in group communication.

According to a fifth aspect, an embodiment of the present disclosure provides a mobile terminal. The mobile terminal includes a processor, a memory, and a computer program that is stored in the memory and executable on the processor, and when the processor executes the computer program, the steps of the resource pool switching method applied to the mobile terminal provided in the foregoing embodiment of the present disclosure are implemented.

According to a sixth aspect, an embodiment of the present disclosure provides a network side device. The network side device includes a processor, a memory, and a computer program that is stored in the memory and executable on the processor, and when the processor executes the computer program, the steps of the resource pool switching method applied to the network side device provided in the foregoing embodiment of the present disclosure are implemented.

According to a seventh aspect, an embodiment of the present disclosure provides a computer-readable storage medium. The computer-readable storage medium stores a computer program, and when a processor executes the computer program, the steps of the resource pool switching method applied to the mobile terminal or the resource pool switching method applied to the network side device provided in the foregoing embodiment of the present disclosure are implemented.

According to the resource pool switching method and apparatus, the mobile terminal, the network side device, and the medium in the embodiments of the present disclosure, service performance can be ensured by switching a resource pool to an abnormal resource pool.

### BRIEF DESCRIPTION OF DRAWINGS

To describe the technical solutions in the embodiments of the present disclosure more clearly, the following briefly describes the accompanying drawings required in the embodiments of the present disclosure. A person of ordinary skill in the art may still derive other drawings from these accompanying drawings without creative efforts.
FIG. 1 is a schematic diagram in which a member vehicle in Internet of Vehicles group communication is located in a plurality of cells according to an embodiment of the present disclosure;
FIG. 2 is a schematic flowchart of a cell handover according to an embodiment of the present disclosure;
FIG. 3 is a schematic diagram of a hardware structure of a mobile terminal according to an embodiment of the present disclosure; and
FIG. 4 is a schematic diagram of a hardware structure of a network side device according to an embodiment of the present disclosure.

### DESCRIPTION OF EMBODIMENTS

The features and exemplary embodiments of each aspect of the present disclosure will be described below in detail. To make the objectives, technical solutions, and advantages of the present disclosure more clearly, the following further describes the present disclosure in detail with reference to the accompanying drawings and embodiments. It should be understood that the specific embodiments described herein are only configured to explain the present disclosure, but are not configured to limit the present disclosure. For a person skilled in the art, the present disclosure may be implemented without some of these specific details. The following description of the embodiments is only to provide a better understanding of the present disclosure by showing examples of the present disclosure.

It should be noted that in this specification, relational terms such as first and second are used only to differentiate an entity or operation from another entity or operation, and do not require or imply that any actual relationship or sequence exists between these entities or operations. In addition, the terms "comprise", "include" and any other variants thereof are intended to cover non-exclusive inclusion, so that a process, a method, an article, or a device that includes a series of elements not only includes these very elements, but may also include other elements not expressly listed, or also include elements inherent to this process, method, article, or device. Without being subject to further limitations, an element defined by a phrase "including ......" does not exclude presence of other identical elements in the process, method, article, or device that includes the very element.

To resolve the related technical problem, embodiments of the present disclosure provide a resource pool switching method and apparatus, a mobile terminal, a network side device, and a medium. The following first describes the resource pool switching method provided in the embodiments of the present disclosure.

A resource pool switching method applied to a mobile terminal provided in the embodiments of the present disclosure may include: if resource pool switching is triggered, switching a currently used resource pool to an abnormal resource pool.

In an embodiment of the present disclosure, that resource pool switching is triggered includes one or a combination of the following listed items:
a first timer expires but a resource configuration response sent by the network side device is not received;
current quality of service is less than a preset quality of service indicator;
a value of information related to a reference signal is less than a first preset value;
a channel busy ratio (Channel Busy Ratio, CBR) is greater than a preset channel busy ratio;
a switching condition for triggering resource pool switching is met;
a signal quality difference between signal quality of a target cell and signal quality of a source cell is greater than preset first signal quality;
the signal quality of the target cell is greater than preset second signal quality;
the signal quality of the source cell is less than preset third signal quality; and starting execution of conditional switching.

The network side device provided in this embodiment of the present disclosure may be a base station, and the base station may be a commonly used base station, or may be an evolved NodeB (evolved node base station, eNB), or may be a network side device in a 5G system (such as a next generation NodeB (next generation node base station, gNB)) or a network side device in a subsequent evolved communications system. However, the foregoing words do not constitute a limitation on the protection scope of the present disclosure.

In an embodiment of the present disclosure, one or more of the listed items that trigger resource pool switching may be configured by the network side device or agreed upon in a protocol.

In an embodiment of the present disclosure, the information related to the reference signal includes reference signal received power and/or reference signal transmitted power.

In Internet of Vehicles group communication, vehicles include a lead vehicle and a non-lead vehicle. In one case, resources of a member group are uniformly scheduled by the lead vehicle, that is, resources of the lead vehicle and another member vehicle in the group are allocated by the lead vehicle, and resources between members vehicle in the group are also allocated by the lead vehicle. Alternatively, resources of the member group may also be uniformly scheduled by a tail vehicle or a specified member vehicle.

In an embodiment of the present disclosure, the mobile terminal may be a lead vehicle in Internet of Vehicles group communication, a tail car in Internet of Vehicles group communication, or a pre-specified member vehicle in Internet of Vehicles group communication. The pre-specified member vehicle may be a lead vehicle, may be a tail vehicle, or may be a member vehicle other than the lead vehicle and the tail vehicle.

The following describes the resource pool switching method provided in this embodiment of the present disclosure by using the lead vehicle as an example.

For example, when resources used by a lead vehicle and another member vehicle in a group need to be allocated by the network side device, the lead vehicle sends a resource configuration request to the network side device to request resource allocation, and starts a first timer. If the first timer expires but a resource configuration response sent by the network side device is not received, resource pool switching is triggered, and the currently used resource pool is switched to the abnormal resource pool. The resource configuration response may include an allocated resource.

For another example, when the lead vehicle discovers that current quality of service (Quality of Service, QoS) of the entire group is less than the preset quality of service indicator, resource pool switching is triggered, and the currently used resource pool is switched to the abnormal resource pool.

For another example, when receive power of a reference signal and/or transmit power of a reference signal reported by another member vehicle in the group is less than a preset power threshold, resource pool switching is triggered, and the currently used resource pool is switched to the abnormal resource pool.

For another example, when a busy to idle ratio of a channel (i.e. Channel Busy Ratio, CBR) reported by another member vehicle in the group is higher than a preset channel busy ratio, resource pool switching is triggered, and the currently used resource pool is switched to the abnormal resource pool.

For another example, the lead vehicle measures signal quality of a target cell and a source cell. When a signal quality difference between the signal quality of the target cell and the signal quality of the source cell is greater than the preset first signal quality, resource pool switching is triggered, and the currently used resource pool is switched to the abnormal resource pool.

For another example, the lead vehicle measures the signal quality of the target cell. When the signal quality of the target cell is greater than the preset second signal quality, resource pool switching is triggered, and the currently used resource pool is switched to the abnormal resource pool.

For another example, the lead vehicle measures the signal quality of the source cell. When the signal quality of the source cell is less than the preset third signal quality, resource pool switching is triggered, and the currently used resource pool is switched to the abnormal resource pool.

It may be understood that, the source cell is a cell in which the lead vehicle is currently located, the target cell is a cell to be handed over to.

In an embodiment of the present disclosure, when resource pool switching is triggered, the lead vehicle may immediately switch the currently used resource pool to the abnormal resource pool.

In an embodiment of the present disclosure, when resource pool switching is triggered, the lead vehicle may immediately switch the currently used resource pool to the abnormal resource pool. In addition, the lead vehicle may start a new timer and use the abnormal resource pool during running of the new timer.

For resource pool switching of a member vehicle other than the pre-specified member vehicle in Internet of Vehicles group communication, that resource pool switching is triggered may include: receiving configuration information of the abnormal resource pool sent by the member vehicle other than the pre-specified member vehicle.

In an embodiment of the present disclosure, the pre-specified member vehicle is a lead vehicle. If another member vehicle in the group receives configuration information of the abnormal resource pool sent by the lead vehicle, resource pool switching is triggered. In this case, the another member vehicle in the group switches the currently used resource pool to the abnormal resource pool.

Specifically, the lead vehicle notifies the another member vehicle in the group of configuration of the abnormal resource pool used by the lead vehicle, that is, the configuration information of the abnormal resource pool of the lead vehicle is sent to the another member vehicle in the group. In this case, in addition to monitoring a normal resource pool, the another member vehicle in the group needs to monitor the abnormal resource pool configured by the lead vehicle. Resource pool switching is triggered when the abnormal resource pool configured by the lead vehicle is monitored.

In an embodiment of the present disclosure, the lead vehicle may periodically or aperiodically send the configuration information of the abnormal resource pool to the another member vehicle in the group. After the lead vehicle switches to the abnormal resource pool, the configuration information of the abnormal resource pool may be sent to the another member vehicle in the group. The another member vehicle in the group is a member vehicle other than the lead vehicle.

In an embodiment of the present disclosure, when a member vehicle spans a plurality of cells, the member vehicle performs a cell handover. In this case, to ensure service performance, a resource pool also needs to be switched to an abnormal resource pool.

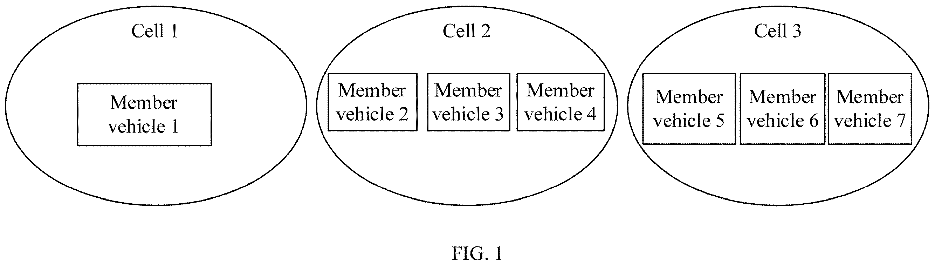

As shown in FIG. 1, a member vehicle in Internet of Vehicles group communication is located in a plurality of cells. FIG. 1 is a schematic diagram in which a member vehicle in group communication is located in a plurality of cells according to an embodiment of the present disclosure. A communication group includes seven member vehicles: a member vehicle 1, a member vehicle 2, ..., and a member vehicle 7. The member vehicle 1 is located in a cell 1, the member vehicle 2, the member vehicle 3, and the member vehicle 4 are located in a cell 2, and the member vehicle 5, the member vehicle 6, and the member vehicle 7 are located in a cell 3. The member vehicle 1 is a lead vehicle in Internet of Vehicles group communication.

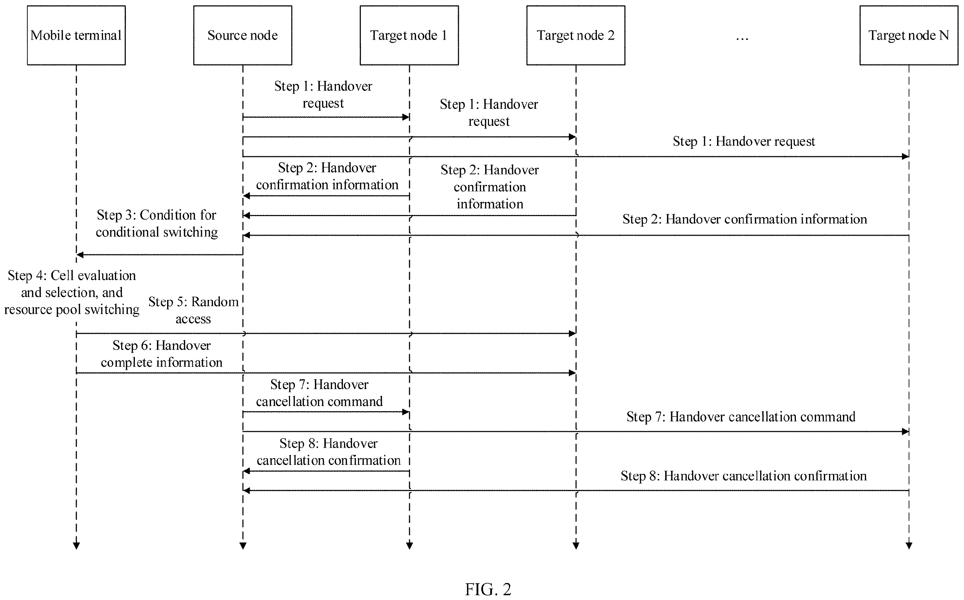

FIG. 2 is a schematic flowchart of a cell handover according to an embodiment of the present disclosure.
Step 1: A source node sends a cell handover request to N target nodes. The N target nodes are a target node 1, a target node 2, ..., and a target node N.
Step 2: The N target nodes feed back handover confirmation information to the source node.
Step 3: The source node configures a condition for conditional switching for a mobile terminal.
Step 4: Cell evaluation and selection, and resource pool switching: The mobile terminal evaluates whether cells corresponding to the N target nodes meet a configured condition; and if yes, selects a cell from the N cells (it is assumed that the selected cell is a cell 2) and performs resource pool switching to switch a resource pool to an abnormal resource pool. The target node X corresponds to a cell X, and X belongs to a set {1, 2,..., N}.
Step 5: Random access: The mobile terminal initiates a random access procedure to the target node 2 corresponding to the selected cell 2.
Step 6: The mobile terminal sends cell handover complete information to the target node 2.
Step 7: The source node sends a cell handover cancellation command to a target node corresponding to another unselected cell.
Step 8: The target node corresponding to the another unselected cell sends cell handover cancellation confirmation to the source node.

The condition for conditional switching may include one or a combination of the following listed items:
a signal quality difference between signal quality of a target cell and signal quality of a source cell is greater than preset first signal quality;
the signal quality of the target cell is greater than preset second signal quality;
the signal quality of the source cell is less than preset third signal quality.

The condition for conditional switching is not limited in this embodiment of the present disclosure, and any available condition may be applied to this embodiment of the present disclosure.

In an embodiment of the present disclosure, the selected cell may meet any one or a combination of the following conditions:
Condition 1: The selected cell is a cell with highest signal quality in the N cells.
Condition 2: Signal quality of the selected cell is higher than that of the source cell.
Condition 3: A signal quality difference between the signal quality of the selected cell and the signal quality of the source cell is greater than preset first signal quality.
Condition 4: The signal quality of the selected cell is higher than preset second signal quality.

It may be understood that the mobile terminal in the steps in FIG. 2 is a lead vehicle in Internet of Vehicles group communication.

According to the resource pool switching method in this embodiment of the present disclosure, service performance can be ensured by switching to the abnormal resource pool.

An embodiment of the present disclosure further provides a resource pool switching method applied to a network side device. The resource pool switching method applied to the network side device may include: configuring a resource pool switching condition, and sending the resource pool switching condition to a mobile terminal in group communication.

In an embodiment of the present disclosure, the resource pool switching condition includes one or a combination of the following items:
a first timer expires but a resource configuration response sent by the network side device is not received;
current quality of service is less than a preset quality of service indicator;
a value of information related to a reference signal is less than a first preset value;
a channel busy ratio is greater than a preset channel busy ratio;
a signal quality difference between signal quality of a target cell and signal quality of a source cell is greater than preset first signal quality;
the signal quality of the target cell is greater than preset second signal quality;
the signal quality of the source cell is less than preset third signal quality; and starting execution of conditional switching.

When receiving the resource pool switching condition sent by the network side device, the mobile terminal triggers resource pool switching based on the resource pool switching condition, to switch the currently used resource pool to the abnormal resource pool, thereby ensuring service performance.

An embodiment of the present disclosure further provides a resource pool switching apparatus applied to a mobile terminal. The resource pool switching apparatus applied to the mobile terminal may include:
a switching module, configured to: if resource pool switching is triggered, switch a currently used resource pool to an abnormal resource pool.

In an embodiment of the present disclosure, that resource pool switching is triggered includes one or a combination of the following listed items:
a first timer expires but a resource allocated by a network side device is not received;
current quality of service is less than a preset quality of service indicator;
a value of information related to a reference signal is less than a first preset value;
a channel busy ratio is greater than a preset channel busy ratio;
a switching condition for triggering resource pool switching is met;
a signal quality difference between signal quality of a target cell and signal quality of a source cell is greater than preset first signal quality;
the signal quality of the target cell is greater than preset second signal quality;
the signal quality of the source cell is less than preset third signal quality; and starting execution of conditional switching.

In an embodiment of the present disclosure, the information related to the reference signal includes:
reference signal received power and/or reference signal transmitted power.

In an embodiment of the present disclosure, that resource pool switching is triggered includes: receiving configuration information of the abnormal resource pool sent by another mobile terminal in group communication.

An embodiment of the present disclosure further provides a resource pool switching apparatus applied to a network side device. The resource pool switching apparatus applied to the network side device may include a configuration module, configured to: configure a resource pool switching condition, and send the resource pool switching condition to a mobile terminal.

In an embodiment of the present disclosure, the resource pool switching condition includes one or a combination of the following items:
a first timer expires but a resource configuration response sent by the network side device is not received;
current quality of service is less than a preset quality of service indicator;
a value of information related to a reference signal is less than a first preset value;
a channel busy ratio is greater than a preset channel busy ratio;
a signal quality difference between signal quality of a target cell and signal quality of a source cell is greater than preset first signal quality;
the signal quality of the target cell is greater than preset second signal quality;
the signal quality of the source cell is less than preset third signal quality.

When receiving the resource pool switching condition sent by the network side device, the mobile terminal triggers resource pool switching based on the resource pool switching condition, to switch the currently used resource pool to the abnormal resource pool, thereby ensuring service continuity.

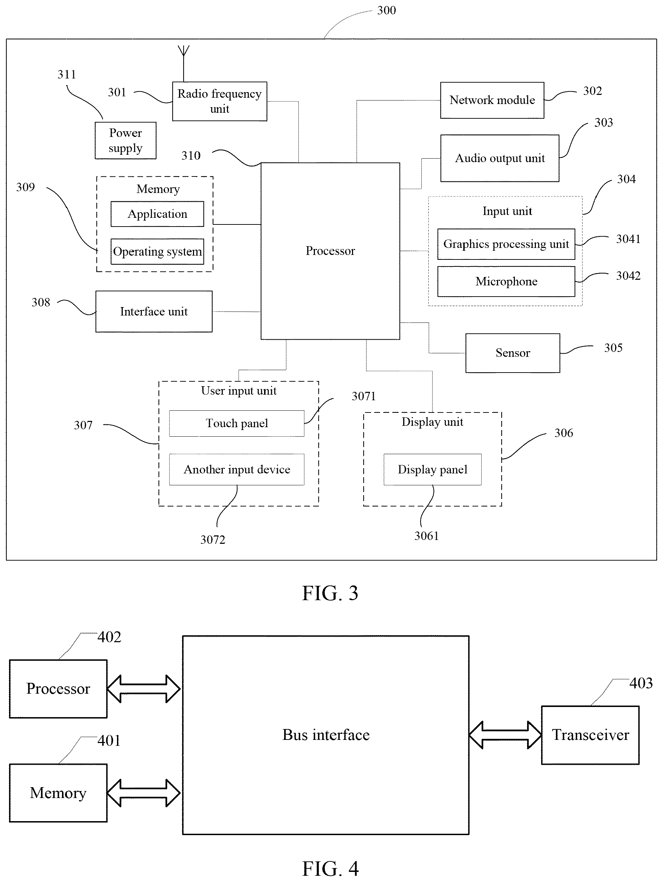

FIG. 3 is a schematic diagram of a hardware structure of a mobile terminal according to an embodiment of the present disclosure. A mobile terminal 300 includes but is not limited to components such as a radio frequency unit 301, a network module 302, an audio output unit 303, an input unit 304, a sensor 305, a display unit 306, a user input unit 307, an interface unit 308, a memory 309, a processor 310, and a power supply 311. A person skilled in the art may understand that the structure of the mobile terminal shown in FIG. 3 constitutes no limitation on the mobile terminal, and the mobile terminal may include more or fewer components than those shown in the figure, or combine some parts, or have a different component arrangement. In this embodiment of the present disclosure, the mobile terminal includes but is not limited to a mobile phone, a tablet computer, a laptop computer, a palmtop computer, an in-vehicle terminal, a wearable device, a pedometer, and the like.

The processor 310 is configured to: if resource pool switching is triggered, switch a currently used resource pool to an abnormal resource pool.

A resource pool switching process of the processor 310 is basically the same as the resource pool switching process applied to the mobile terminal in the foregoing method embodiment. For details, refer to the descriptions in the foregoing method embodiment. Details are not described again in this embodiment of the present disclosure.

According to this embodiment of the present disclosure, service performance can be ensured.

It should be understood that, in this embodiment of the present disclosure, the radio frequency unit 301 may be configured to receive and send information or a signal in a call process. Specifically, after receiving downlink data from a base station, the radio frequency unit 301 sends the downlink data to the processor 310 for processing. In addition, the radio frequency unit 301 sends uplink data to the base station. Usually, the radio frequency unit 301 includes but is not limited to an antenna, at least one amplifier, a transceiver, a coupler, a low noise amplifier, a duplexer, and the like. In addition, the radio frequency unit 301 may communicate with a network and another device through a wireless communication system.

The mobile terminal provides wireless broadband Internet access for the user by using the network module 302, for example, helping the user to send and receive an e-mail, browse a web page, and access streaming media.

The audio output unit 303 may convert audio data received by the radio frequency unit 301 or the network module 302 or stored in the memory 309 into an audio signal and output the audio signal as a sound. In addition, the audio output unit 303 may further provide an audio output (for example, a call signal received voice, or a message received voice) related to a specific function implemented by the mobile terminal 300. The audio output unit 303 includes a speaker, a buzzer, a telephone receiver, and the like.

The input unit 304 is configured to receive an audio signal or a video signal. The input unit 304 may include a graphics processing unit (Graphics Processing Unit, GPU) 3041 and a microphone 3042, and the graphics processing unit 3041 processes image data of a still picture or video obtained by an image capture apparatus (such as a camera) in a video capture mode or an image capture mode. A processed image frame may be displayed on the display unit 306. The image frame processed by the graphics processing unit 3041 can be stored in the memory 309 (or another storage medium) or sent via the radio frequency unit 301 or the network module 302. The microphone 3042 may receive sound and can process such sound into audio data. Processed audio data may be converted, in a call mode, into a format that can be sent to a mobile communication base station by using the radio frequency unit 301 for output.

The mobile terminal 300 may further include at least one sensor 305 such as an optical sensor, a motion sensor, and another sensor. Specifically, the optical sensor includes an ambient light sensor and a proximity sensor. The ambient light sensor may adjust luminance of the display panel 3061 based on brightness of ambient light, and the proximity sensor may disable the display panel 3061 and/or backlight when the mobile terminal 300 approaches an ear. As a type of the motion sensor, an accelerometer sensor may detect an acceleration value in each direction (generally, three axes), and detect a value and a direction of gravity when the accelerometer sensor is static, and may be used in an application for recognizing a mobile terminal posture (such as screen switching between landscape and portrait modes, a related game, or magnetometer posture calibration), a function related to vibration recognition (such as a pedometer or a knock), and the like. The sensor 305 may further include a fingerprint sensor, a pressure sensor, an iris sensor, a molecular sensor, a gyroscope, a barometer, a hygrometer, a thermometer, an infrared sensor, and the like. Details are not described herein.

The display unit 306 is configured to display information entered by a user or information provided for a user. The display unit 306 may include a display panel 3061, and the display panel 3061 may be configured in a form of a liquid crystal display (Liquid Crystal Display, LCD), an organic light-emitting diode (Organic Light-Emitting Diode, OLED), or the like.

The user input unit 307 may be configured to: receive digit or character information that is input, and generate key signal input related to user setting and function control of the mobile terminal. Specifically, the user input unit 307 includes a touch panel 3071 and another input device 3072. The touch panel 3071 is also referred to as a touchscreen, and may collect a touch operation performed by a user on or near the touch panel 3071 (such as an operation performed by a user on the touch panel 3071 or near the touch panel 3071 by using any proper object or accessory, such as a finger or a stylus). The touch panel 3071 may include two parts: a touch detection apparatus and a touch controller. The touch detection apparatus detects a touch position of the user, detects a signal brought by the touch operation, and sends the signal to the touch controller. The touch controller receives touch information from the touch detection apparatus, converts the touch information into touch point coordinates, and sends the touch point coordinates to the processor 310, and can receive and execute a command sent by the processor 310. In addition, the touch panel 3071 may be of a resistive type, a capacitive type, an infrared type, a surface acoustic wave type, or the like. The user input unit 307 may include another input device 3072 in addition to the touch panel 3071. Specifically, the another input device 3072 may include but is not limited to a physical keyboard, a functional button (such as a volume control button or a power on/off button), a trackball, a mouse, and a joystick. Details are not described herein.

Further, the touch panel 3071 may cover the display panel 3061. When detecting the touch operation on or near the touch panel 3071, the touch panel 3071 transmits the touch operation to the processor 310 to determine a type of a touch event, and then the processor 310 provides corresponding visual output on the display panel 3061 based on the type of the touch event. In FIG. 2, although the touch panel 3071 and the display panel 3061 are used as two independent parts to implement input and input functions of the mobile terminal, in some embodiments, the touch panel 3071 and the display panel 3061 may be integrated to implement the input and output functions of the mobile terminal. This is not specifically limited herein.

The interface unit 308 is an interface for connecting an external apparatus with the mobile terminal 300. For example, the external apparatus may include a wired or wireless headset jack, an external power supply (or a battery charger) port, a wired or wireless data port, a storage card port, a port for connecting an apparatus having an identification module, an audio input/output (Input/Output, I/O) port, a video I/O port, a headset jack, or the like. The interface unit 308 may be configured to receive input (such as data information and power) from the external apparatus and transmit the received input to one or more elements in the mobile terminal 300, or may be configured to transmit data between the mobile terminal 300 and the external apparatus.

The memory 309 may be configured to store a software program and various data. The memory 309 may mainly include a program storage area and a data storage area. The program storage area may store an operating system, an application required by at least one function (such as a sound play function or an image play function), and the like. The data storage area may store data (such as audio data or an address book) created based on use of the mobile phone, and the like. In addition, the memory 309 may include a high-speed random access memory, and may further include a non-volatile memory such as at least one magnetic disk storage component, a flash memory component, or another volatile solid-state storage component.

The processor 310 is a control center of the mobile terminal and is connected to all the parts of the entire mobile terminal by using various interfaces and lines, and performs various functions of the mobile terminal and data processing by running or executing the software program and/or module that are/is stored in the memory 309 and by invoking data stored in the memory 309, so as to perform overall monitoring on the mobile terminal. The processor 310 may include one or more processing units. Optionally, an application processor and a modem processor may be integrated into the processor 310. The application processor mainly processes an operating system, a user interface, an application, and the like. The modem processor mainly processes wireless communication. It may be understood that, alternatively, the modem processor may not be integrated into the processor 310.

The mobile terminal 300 may further include a power supply 311 (such as a battery) that supplies power to each component. Optionally, the power supply 311 may be logically connected to the processor 310 by using a power supply management system, to implement functions such as charging, discharging, and power consumption management by using the power supply management system.

In addition, the mobile terminal 300 includes some function modules not shown, and details are not described herein.

Optionally, an embodiment of the present disclosure further provides a mobile terminal, including: a processor 310, a memory 309, and a computer program that is stored in the memory 309 and executable on the processor 310. When the processor 310 executes the computer program, the foregoing processes of the resource pool switching method embodiment applied to the mobile terminal are implemented, and a same technical effect can be achieved. To avoid repetition, details are not described herein again.

FIG. 4 is a schematic structural diagram of hardware of a network side device according to an embodiment of the present disclosure. The network side device includes a memory 401, a processor 402, a transceiver 403, and a computer program stored in the memory 401 and executable on the processor 402.

The processor 402 may be configured to: configure a resource pool switching condition, and send the resource pool switching condition to a mobile terminal in group communication.

In an embodiment of the present disclosure, the resource pool switching condition includes one or a combination of the following items:
a first timer expires but a resource configuration response sent by the network side device is not received;
current quality of service is less than a preset quality of service indicator;
a value of information related to a reference signal is less than a first preset value;
a channel busy ratio is greater than a preset channel busy ratio;
a signal quality difference between signal quality of a target cell and signal quality of a source cell is greater than preset first signal quality;
the signal quality of the target cell is greater than preset second signal quality;
the signal quality of the source cell is less than preset third signal quality; and starting execution of conditional switching.

When receiving the resource pool switching condition sent by the network side device, the mobile terminal triggers resource pool switching based on the resource pool switching condition, to switch the currently used resource pool to the abnormal resource pool, thereby ensuring service continuity.

In FIG. 4, a bus architecture may include any quantity of interconnected buses and bridges, which are specifically connected together by one or more processors represented by the processor 402 and various circuits of a memory represented by the memory 401. The bus architecture may further connect together various other circuits of a peripheral device, a voltage stabilizer, a power management circuit, and the like, which are known in this art and will not be further described herein. The bus interface provides an interface. The transceiver 403 may be a plurality of elements, to be specific, include a transmitter and a receiver, and provide a unit configured to communicate with various other apparatuses on a transmission medium, and is configured to receive and send data under the control of the processor 402. The processor 402 is responsible for management on and general processing of the bus architecture. The memory 401 can store data used by the processor 402 during operation execution.

Optionally, an embodiment of the present disclosure further provides a network side device, including: a processor 402, a memory 401, and a computer program that is stored in the memory 401 and executable on the processor 402. When the processor 402 executes the computer program, the foregoing processes of the resource pool switching method embodiment applied to the network side device are implemented, and a same technical effect can be achieved. To avoid repetition, details are not described herein again.

An embodiment of the present disclosure further provides a computer-readable storage medium. The computer-readable storage medium stores a computer program instruction, and when a processor executes the computer program instruction, the processes of the resource pool switching method embodiment applied to the mobile terminal or the resource pool switching method embodiment applied to the network side device provided in the embodiments of this disclosure are implemented, and a same technical effect can be achieved. To avoid repetition, details are not described herein again. The computer readable storage medium may be a read-only memory (Read-Only Memory, ROM), a random access memory (Random Access Memory, RAM), a magnetic disk, a compact disc, or the like.

It should be noted that, in this specification, the terms "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such a process, method, article, or apparatus. An element limited by "includes a ..." does not, without more constraints, preclude the presence of additional identical elements in the process, method, article, or apparatus that includes the element.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of the present disclosure essentially or the part contributing to the related art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of the present disclosure.

A person of ordinary skill in the art may be aware that, in combination with the examples described in the embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present disclosure.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a computer readable storage medium. Based on such an understanding, the technical solutions of the present disclosure essentially, or the part contributing to the related art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present disclosure. The storage medium includes various mediums, such as a USB flash disk, a removable hard disk, a ROM, a RAM, a magnetic disk, or an optical disc, which can store program code.

A person of ordinary skill in the art can understand that all or some of the procedures in the methods of the foregoing embodiments may be implemented by a computer program controlling related hardware. The program may be stored in a computer-readable storage medium. When the program is executed, the procedures of the embodiments of the foregoing methods may be performed. The foregoing storage medium may be a magnetic disk, an optical disc, a read-only memory (Read-Only Memory, ROM), a random access memory (Random Access Memory, RAM), or the like.

It may be understood that the embodiments described in the embodiments of the present disclosure may be implemented by hardware, software, firmware, middleware, microcode, or a combination thereof. For hardware implementation, a processing unit can be implemented in one or more application-specific integrated circuits (Application Specific Integrated Circuits, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, other electronic units used to perform the functions described in this disclosure, or a combination thereof.

For software implementation, the technology in the embodiments of the present disclosure may be implemented through modules (for example, procedures or functions) that perform the functions in the embodiments of the present disclosure. Software code may be stored in a memory and executed by a processor. The memory may be implemented in the processor or outside the processor.

The embodiments of the present disclosure are described above with reference to the accompanying drawings, but the present disclosure is not limited to the foregoing specific implementations. The foregoing specific implementations are merely exemplary instead of restrictive. Under enlightenment of the present disclosure, a person of ordinary skills in the art may make many forms without departing from the aims of the present disclosure and the protection scope of claims, all of which fall within the protection of the present disclosure.

## Claims

1. A resource pool switching method, applied to a mobile terminal and comprising:
if resource pool switching is triggered, switching a currently used resource pool to an abnormal resource pool.

2. The method according to claim 1, wherein that resource pool switching is triggered comprises one or a combination of following listed items:
a first timer expires but a resource configuration response sent by a network side device is not received;
current quality of service is less than a preset quality of service indicator;
a value of information related to a reference signal is less than a first preset value;
a channel busy ratio is greater than a preset channel busy ratio;
a signal quality difference between signal quality of a target cell and signal quality of a source cell is greater than preset first signal quality;
the signal quality of the target cell is greater than preset second signal quality;
the signal quality of the source cell is less than preset third signal quality; and
starting execution of conditional switching.

3. The method according to claim 2, wherein the information related to the reference signal comprises:
reference signal received power and/or reference signal transmitted power.

4. The method according to claim 1, wherein that resource pool switching is triggered comprises:
receiving configuration information of the abnormal resource pool sent by another mobile terminal in group communication.

5. A resource pool switching method, applied to a network side device and comprising:
configuring a resource pool switching condition; and
sending the resource pool switching condition to a mobile terminal in group communication.

6. The method according to claim 5, wherein the resource pool switching condition comprises one or a combination of following listed items:
a first timer expires but a resource configuration response sent by the network side device is not received;
current quality of service is less than a preset quality of service indicator;
a value of information related to a reference signal is less than a first preset value;
a channel busy ratio is greater than a preset channel busy ratio;
a signal quality difference between signal quality of a target cell and signal quality of a source cell is greater than preset first signal quality;
the signal quality of the target cell is greater than preset second signal quality;
the signal quality of the source cell is less than preset third signal quality; and
starting execution of conditional switching.

7. A resource pool switching apparatus, applied to a mobile terminal and comprising:
a switching module, configured to: if resource pool switching is triggered, switch a currently used resource pool to an abnormal resource pool.

8. The apparatus according to claim 7, wherein that resource pool switching is triggered comprises one or a combination of following listed items:
a first timer expires but a resource allocated by a network side device is not received;
current quality of service is less than a preset quality of service indicator;
a value of information related to a reference signal is less than a first preset value;
a channel busy ratio is greater than a preset channel busy ratio;
a switching condition for triggering resource pool switching is met;
a signal quality difference between signal quality of a target cell and signal quality of a source cell is greater than preset first signal quality;
the signal quality of the target cell is greater than preset second signal quality;
the signal quality of the source cell is less than preset third signal quality; and
starting execution of conditional switching.

9. The apparatus according to claim 8, wherein the information related to the reference signal comprises:
reference signal received power and/or reference signal transmitted power.

10. The apparatus according to claim 7, wherein that resource pool switching is triggered comprises:
receiving configuration information of the abnormal resource pool sent by another mobile terminal in group communication.

11. A resource pool switching apparatus, applied to a network side device and comprising:
a configuration module, configured to: configure a resource pool switching condition, and send the resource pool switching condition to a mobile terminal in group communication.

12. The apparatus according to claim 11, wherein the resource pool switching condition comprises one or a combination of following listed items:
a first timer expires but a resource configuration response sent by the network side device is not received;
current quality of service is less than a preset quality of service indicator;
a value of information related to a reference signal is less than a first preset value;
a channel busy ratio is greater than a preset channel busy ratio;
a signal quality difference between signal quality of a target cell and signal quality of a source cell is greater than preset first signal quality;
the signal quality of the target cell is greater than preset second signal quality;
the signal quality of the source cell is less than preset third signal quality; and
starting execution of conditional switching.

13. A mobile terminal, comprising a processor, a memory, and a computer program that is stored in the memory and executable on the processor, wherein when the processor executes the computer program, the steps of the resource pool switching method according to any one of claims 1 to 4 are implemented.

14. A network side device, comprising a processor, a memory, and a computer program that is stored in the memory and executable on the processor, wherein when the processor executes the computer program, the steps of the resource pool switching method according to claim 5 or 6 are implemented.

15. A computer-readable storage medium, wherein the computer-readable storage medium stores a computer program, and when a processor executes the computer program, the steps of the resource pool switching method according to any one of claims 1 to 4 or the resource pool switching method according to claim 5 or 6 are implemented.
